# NEUE EUROPÄISCHE PATENTSCHRIFT

(11) **EP 0 466 118 B2**
(45) Veröffentlichungstag und Bekanntmachung des Hinweises auf die Entscheidung über den Einspruch: **25.04.2001**
(45) Hinweis auf die Patenterteilung: 11.10.1995
(21) Anmeldenummer: 91111437.9
(22) Anmeldetag: 09.07.1991
(51) Int. Cl.: G03H 1/02, B32B 33/00

(54) **Mehrschichtiges optisch variables Element**
Multilayered optically variable element
Elément multicouche optiquement variable

(30) Priorität: 10.07.1990 DE 4021908
(43) Veröffentlichungstag der Anmeldung: 15.01.1992
(73) Patentinhaber: GAO Gesellschaft für Automation und Organisation mbH, 81307 München (DE)
(72) Erfinder: Kaule, Wittich, Dr., W-8089 Emmering (DE)
(74) Vertreter: Klunker . Schmitt-Nilson . Hirsch

(56) Entgegenhaltungen:
- EP-A- 0 093 009
- EP-A- 0 201 323
- EP-A- 0 365 031
- EP-A- 0 401 466
- DE-A- 2 555 216
- DE-A- 3 308 831
- US-A- 4 728 377

## Beschreibung

Die Erfindung betrifft ein mehrschichtiges optisch variables Transfermaterial. Die Erfindung betrifft weiterhin ein Verfahren zur Herstellung des optisch variablen Transfermaterials.

Unter optisch variablen Elementen werden in erster Linie Hologramme und Beugungsgitter verstanden; allerdings sind auch andere Elemente denkbar, die durch charakteristische Interferenzeffekte, Reflexion, Transmission, Absorption und andere Eigenschaften einen optisch sichtbaren Effekt aufweisen, der sich abhängig vom Betrachtungswinkel und/oder der eingestrahlten Wellenlänge ändert.

Hologramme werden üblicherweise in Form von folienartigen Etiketten hergestellt und mittels eines Haftklebers oder einer Heißpräge-Transfertechnik auf das gewünschte Substrat wie Papier, Plastik, Textilmaterial oder dergleichen übertragen. Auch das direkte Einprägen von Hologrammen in Lackschichten, die auf dem Substrat angeordnet sind, ist bekannt. Die Hologramme werden nach dem Prägen durch Bestrahlung mit UV-Licht oder Elektronenstrahlen gehärtet.

Hologramme werden zunehmend als Echtheitsmerkmale zur Absicherung von Wertpapieren und Karten eingesetzt, die im bargeldlosen Zahlungsverkehr verwendet werden. Derartige Hologramme müssen einerseits verfälschungssicher, d. h. mit dem Träger praktisch unlösbar, sein. Darüber hinaus müssen sie erheblichen mechanischen Beanspruchungen über längere Zeit ohne merkbare Veränderungen standhalten.

Hologramme aus Kunststoffolien, die mit einem Haftkleber auf einem Substrat befestigt werden, weisen eine relativ große Stabilität auf, d. h. sie sind bestens geeignet, den auftretenden mechanischen Beanspruchungen standzuhalten. Nachteilig ist jedoch ihre Dicke und damit verbunden ihre Steifheit, die es z. B. unmöglich macht, derartige Haftetiketten zur Absicherung von Banknoten zu verwenden.

Hologramme, die in eine dünne, auf dem Substrat angeordnete Lackschicht eingeprägt sind, können zwar vielseitig verwendet werden, wegen ihrer geringen Dicke beispielsweise auch in Banknoten. Die Lackschicht ist jedoch sehr empfindlich gegenüber mechanischen und chemischen Beanspruchungen. Zur Absicherung von Wertpapieren und Karten, die über längere Zeit täglich benutzt werden, sind sie daher nicht geeignet.

Aus der DE-OS 33 08 831 ist bereits ein Hologramm bekannt, das im Transferverfahren auf ein Substrat aufgebracht werden kann. Um das relativ dünne Hologramm besser handhaben zu können, ist es über eine Trennschicht mit einer relativ stabilen Trägerfolie verbunden, die nach dem Aufbringen des Hologramms auf das Substrat abgezogen werden kann. Diese Technik ermöglicht das Aufbringen vergleichsweise dünnschichtiger Hologramme, die als solche wegen ihrer geringen Dimensionsstabilität und Steifheit aber kaum handhabbar sind. Diese Eigenschaft wird dahingehend genutzt, daß ein nachträgliches Ablösen des Hologramms zu Manipulationszwecken ausgeschlossen ist. Zusammen mit der Trägerfolie ist andererseits eine maschinelle Bearbeitung, beispielsweise beim Zusammenführen von Substrat und Hologramm, in einem Walzenspalt möglich.

Das bekannte Hologramm weist auf seiner der Trägerfolie abgewandten Seite eine Heißschmelzklebeschicht auf, die es ermöglicht, Etiketten auf ein Substrat zu übertragen, deren Umriß exakt dem Umriß eines Heizstempels entspricht, mit dem das Verbundmaterial gegen das Substrat gedrückt wird. Nach dem Ablösen der Trägerschicht ist das bekannte Hologramm durch eine thermoplastische transparente Schicht geschützt, die, um das Ablösen zu verhindern, keinerlei Dimensionsstabilität aufweist und die nicht selbsttragend ist. Diese thermoplastische Schutzschicht behindert den Transfer auf das Substrat in keiner Weise, da sie nach dem Andrücken des Hologramms auf das Substrat beim Abziehen der Trägerfolie im Randbereich des beheizten Transferstempels reißt und somit auch ein leichtes Abtrennen derjenigen Bereiche ermöglicht, die nicht vom Transferstempel belastet sind. Es muß jedoch als gravierender Nachteil angesehen werden, daß diese thermoplastische Schutzschicht relativ weich und wenig widerstandsfähig ist. Ein mit einer solchen Schicht geschütztes Hologramm hält den mechanischen und chemischen Umwelteinflüssen über längere Zeit nicht stand.

Die nachveröffentlichte EP 0 401466 A1 offenbart ein Transfermaterial das eine Klebeschicht, eine optisch variable Schicht, eine Schutzschicht und eine Trägerschicht aufweist.
Als geeignetes Material für die Schutzschicht ist Polyester genannt. Spezielle Vertreter dieser Gruppe sind nicht genannt.

Die EP 0 201 323 A2 offenbart ein Transfermaterial mit konventionellen Schutzschichten, die beim Transfer im Randbereich des Stempels reissen. Weiterhin sind auch Etiketten beschrieben, die eine äussere Schutzschicht aus PETP aufweisen.

Der Erfindung liegt die Aufgabe zugrunde, ein optisch variables Element zu schaffen, das bei größtmöglicher Haltbarkeit gegen Umwelteinflüsse, d. h. gegen Abrieb, Knittern, Verschmutzen, Waschen, Chemikalien usw., eine möglichst geringe Dicke aufweist und das einerseits leicht herstellbar ist und andererseits mittels eines Transferverfahrens ohne Schwierigkeiten auf ein Substrat übertragen werden kann.

Erfindungsgemäß wird diese Aufgabe mit den in den unäbhangige Ansprüchen angegebenen Merkmalen gelöst.

Die Erfindung beruht dabei auf der Erkenntnis, daß das Hologramm aus Sicherheitsgründen zwar durchaus mechanisch instabil sein kann, daß aber die Schutzschicht des Hologramms keine instabile, nicht selbsttragende Folie sein darf, sondern im Gegenteil eine Schicht, die trotz geringer Dicke mechanischen Belastungen in bestmöglichem Maße standhält. Als besonders geeignet hat sich eine Folie aus PC, PVF, PETP, PCTFE oder FEP mit einer Dicke von wenigen Mikrometern bis etwa 20 µ, insbesondere im Bereich um 10 µ, bewährt.

Da derartig dünne Folien maschinell nicht handhabbar sind, wird der Folienverbund, wie an sich bekannt, mit einer Trägerfolie kombiniert, die nach dem Aufbringen des Hologramms auf das Substrat abgezogen wird.

Beim Aufbringen von Hologrammen wird der Umriß des jeweiligen Flächenelementes in der dünnen Schutzfolie vorgestanzt, so daß ein Ablösen bzw. Herauslösen des Hologramms aus dem umgebenden Material ohne weiteres möglich ist

Das Ersetzen der bekannten instabilen Schicht durch eine ebenfalls dünne, aber dafür äußerst widerstandsfähige Folie, beispielsweise aus Polycarbonat (PC), Polyvinylfluorid (PVF), Polyethylenterephthalat (PETP), Polychlortrifluorethylen (PCTFE), Tetrafluorethylen/Hexafluorpropylen-Copolymer (FEP), führt zusammen mit der Maßnahme einer Vorstanzung der Hologrammumrisse zu einem Hologramm, das in bisher nicht gekannter Weise die Vorteile einer besonders geringen Dicke mit den Vorteilen einer exzellenten mechanischen Haltbarkeit verbindet. Unter Berücksichtigung eventueller Sicherheitsaspekte ist die das Hologramm tragende Schicht ohne große Eigenfestigkeit zu dimensionieren, die Schutzfolie dagegen ist in der Dicke und den Materialeigenschaften so zu wählen, daß sie in dem auf dem Substrat aufgebrachten Zustand einerseits mechanische und andere Belastungen von der Hologrammschicht in ausreichendem Maß abfängt, andererseits aber so dimensioniert ist, daß eine nachträgliches Ablösen zumindest zur irreversiblen Verformung oder Zerstörung führt Eine Schutzfolie aus PC, PVF, PETP, PCTFE oder FEP, in der Dicke von etwa 3 - 20 µ, insbesondere im Bereich von von 10 µ, erfüllt diese an sich widersprüchlichen Forderungen in hervorragender Weise. Bei Verwendung von ausreichend zähem Kunststoffmaterial ist sogar eine Schichtdicke von etwa 1 µ möglich. Darüber hinaus ist ein solches Hologramm sowohl als Haftetikett auf einem Substrat aufzubringen, es können aber auch bekannte Heißklebetechniken Verwendung finden.

Statt einem Prägehologramm können selbstverständlich auch andere Schichten mit optisch variablen Effekten eingesetzt werden, so beispielsweise eine Fotoemulsionsschicht mit einem Volumenhologramm, auch Beugungsgitter und Schichten mit Interferenz- und Farbwechseleffekten sind denkbar.

Zur Konfektionierung des Verbundfolienmaterials wird das Material im einfachsten Fall in Streifen geschnitten und aufgerollt. Die Applikation dieser Streifen oder Fäden auf ein endlos zulaufendes Substrat erfolgt vorzugsweise in einem kalanderähnlichen Walzenstuhl.

Für etikettenartige Hologramme beliebigen Umrisses wird die an sich bekannte Abziehbild-Technik angewandt, d. h. der Etikettenumriß wird bis in die dünne Schutzfolie hinein vorgestanzt, so daß beim Abziehen der Trägerfolie das Etikett am Substrat haften bleibt.

Die erfindungsgemäßen Hologramme eignen sich wegen ihrer mechanischen Belastbarkeit und ihrer geringen Dicke besonders für die Ausrüstung von Wertpapieren, wie Banknoten. Darüber hinaus ist die leichte Handhabbarkeit und preiswerte Herstellung des Transfermaterials von großer Bedeutung.

Nachfolgend sind Ausführungsbeispiele der Erfindung anhand der beigefügten Zeichnung beispielsweise beschrieben. Darin zeigen:
Fig. 1a - c verschiedene Herstellungsstufen des Transfermaterials,
Fig. 2 die Herstellung des Transfermaterials nach Fig. 1a im Prinzip und
Fig. 3 die Aufbringung eines Hologramms auf ein endloses Papierband im Prinzip.

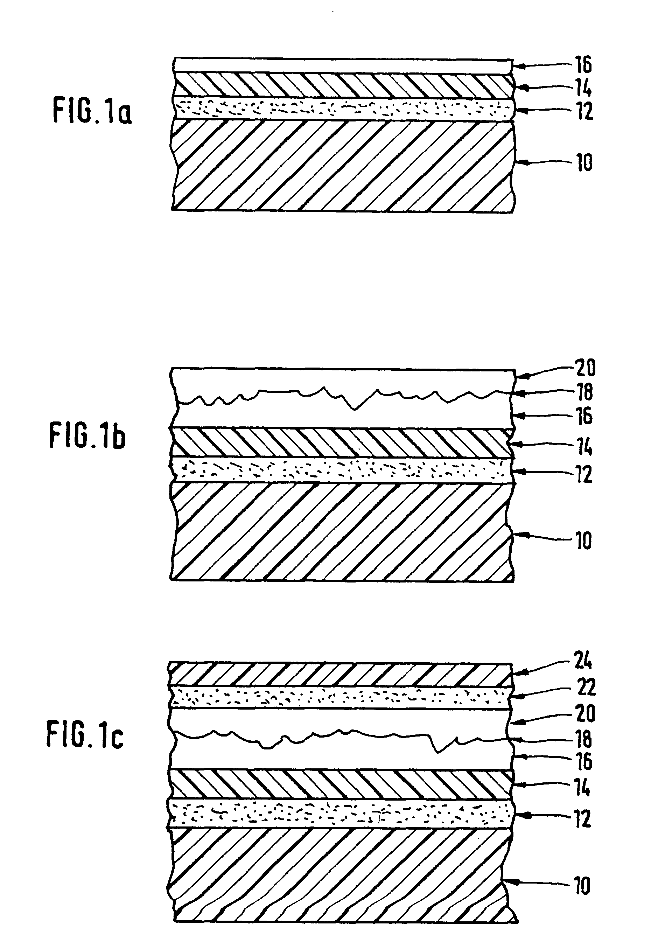

Das in Fig. 1a bis 1c dargestellte erfindungsgemäße Hologramm besteht aus einer relativ dicken, stabilen Trägerfolie 10. Vorzugsweise werden Polyesterfolien verwendet. Auf der Trägerfolie ist eine Trennschicht 12 angeordnet, beispielsweise ein Wachs das ein leichtes Abziehen der Trägerfolie 10 vom übrigen Verbundmaterial sicherstellt. An die Trennschicht 12 grenzt die transparente dünne Schutzfolie 14 an, die vorzugsweise aus PC, PVF, PETP, PCTFE oder FEP besteht. Derartige Folien sind für ihre hervorragende mechanische Haltbarkeit und Dimensionsstabilität bekannt. Auf der Schutzfolie 14 ist eine Prägeschicht 16 angeordnet, die beispielsweise aus einem bekannten prägbaren Lack besteht. Das geprägte Lackrelief wird üblicherweise metallbedampft. Die Metallbedampfung ist in den Fig. 1b und 1c mit der Bezugsziffer 18 angedeutet.

Oberhalb der reflektierenden Metallschicht kann eine Schutzschicht 20 angeordnet sein, an die eine Klebeschicht 22 angrenzt. Die Schutzschicht 20 kann auch weggelassen werden; unter bestimmten Umständen kann es ausreichen, wenn die Klebeschicht 22 ausreichender Dicke direkt auf dem Prägehologramm 18 aufliegt.

Falls die Klebeschicht ein Haftkleber ist, d. h. ein Kleber, der im kalten Zustand klebt, muß die Klebeschicht, um das Verbundmaterial handhaben zu können, mit einer Schicht 24 abgedeckt sein. In diesem Zusammenhang hat sich Silikonpapier besonders bewährt. Ist die Schicht ein Heißkleber, wird eine solche Papierschicht selbstverständlich nicht benötigt, da der Heißkleber erst bei höherer Temperatur seine Klebewirkung entfaltet.

Statt dem Prägehologramm 18 kann auch eine lichtempfindliche Schicht vorgesehen sein, in die das Hologramm durch Belichten eingebracht wird, d. h. ein sogenanntes Volumenhologramm. Solche lichtempfindlichen Schichten und ihre Behandlung sind bekannt, geeignete Materialien sind Fotopolymere oder feinkörnige fotografische Emulsionen. Statt mit einer Metallschicht wird das Volumenhologramm mit einer schwarzen Rückschicht aus Lack abgedeckt. Es ist auch möglich, die ohnehin vorhandene Klebeschicht 22 schwarz einzufärben.

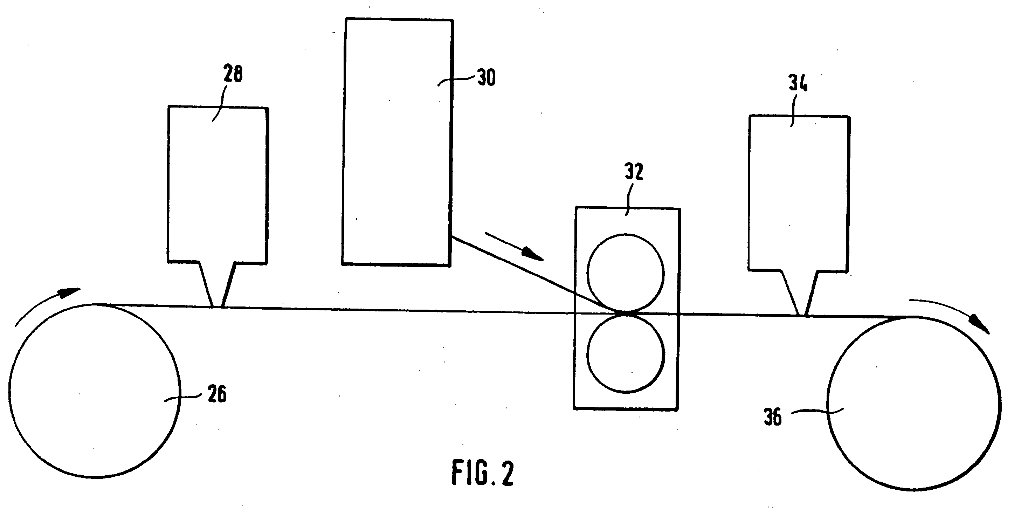

Die Herstellung eines Halbzeugs gemäß Fig. 1a ist im Prinzip in Fig. 2 dargestellt. Auf die von einer Trommel 26 abgerollte Trägerfolie 10 wird bei 28 eine Trennschicht (Release-Schicht) aus beispielsweise Wachs aufgebracht. Die erfindungsgemäße Schutzfolie läuft von einer Folienherstellungs- oder Abrollvorrichtung 30 zur Kaschiereinrichtung 32, in welcher die Folie beim Durchlauf durch einen Walzenspalt auf die Trägerfolie aufkaschiert wird. Schließlich wird in der Station 34 die Prägeschicht 16 aufgebracht. Das Verbundmaterial gemäß Fig. 1a wird schließlich auf der Trommel 36 aufgewickelt und dann in bekannter Art und Weise weiterverarbeitet.

Die weiteren Schritte sind die Einprägung eines Hologramms in die Prägeschicht 16, eine Bedampfung der Prägeschicht 16 vor oder nach der Prägung und dann gegebenenfalls die Aufbringung einer Schutzschicht 20. Auf die Schutzschicht wird sodann der Kleber aufgebracht, der ein Haftkleber oder auch Heißkleber sein kann. Falls ein Haftkleber verwendet wird, wird das Verbundmaterial mit Silikonpapier abgedeckt.

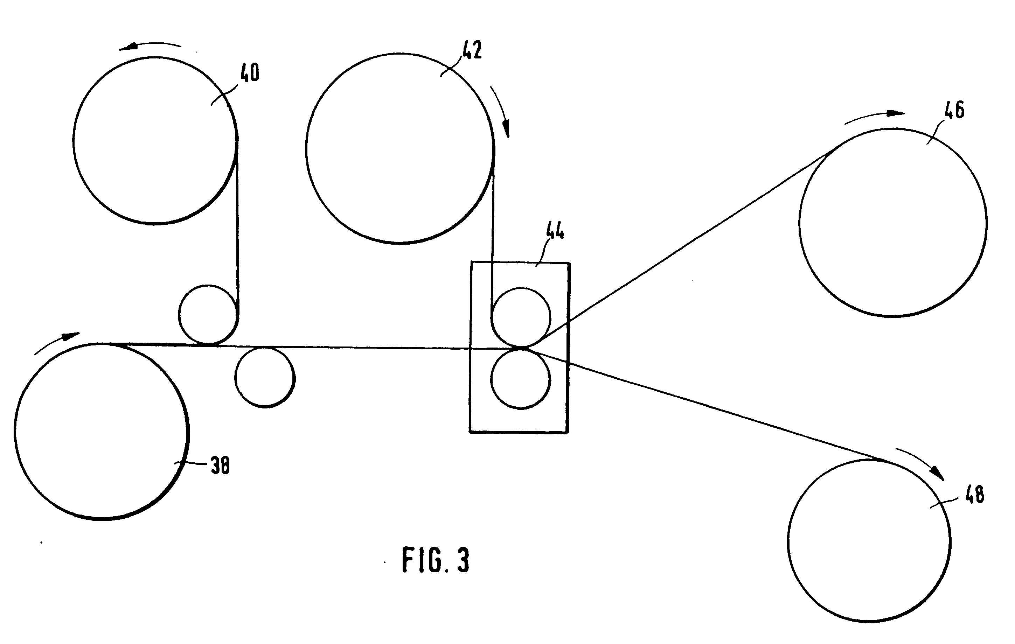

In Fig. 3 ist die Prinzipskizze einer Applikationsanlage dargestellt, mit der ein Aufbringen der Hologramme auf ein endloses Papierband möglich ist. Das Folienverbundmaterial gemäß Fig. 1c wird von der Trommel 38 abgezogen, wobei als erstes das Silikonpapier 24 von dem Verbundmaterial über die Trommel 40 abgelöst wird. Das mit dem Hologramm zu versehende Papier wird von der Trommel 42 einem Walzenstuhl 44 zugeführt, wonach in einem Walzenspalt das Hologramm mit der Haftklebeschicht 22 auf das Papier aufgedrückt wird. Das mit dem Hologramm beklebte Papier wird auf die Trommel 46 aufgewickelt, während die Trägerfolie von dem Verbund abgelöst wird und zur Trommel 48 läuft. Im gezeigten Fall wird ein kontinuierliches Hologrammband bzw. ein endloser Faden auf den Papierträger übertragen.

Es ist natürlich ebenfalls möglich, mit der bekannten Heißtransfertechnikzu arbeiten, d. h. die Klebeschicht 22 als Heißklebeschicht auszubilden und das Hologramm mittels Walzen oder beheizter Stempel aufzuprägen. Dadurch wird nur die direkt unter der Walze oder dem Stempel liegende Klebeschicht weich und haftet an dem Substrat. Beim Abziehen werden alle Teile des Verbundmaterials mit entfernt, die in Bereichen lagen, die vom Heizstempel nicht erwärmt wurden.

Natürlich ist es in bei Verwendung von inselförmigen Etiketten unabhängig vom verwendeten Klebeverfahren (Heißkleber, Haftkleber etc.) erforderlich, die dünne Schutzfolie 14, die ein reißfestes, stabiles Material ist, entsprechend vorzustanzen, da sonst ein Herauslösen des Hologrammetiketts aus dem Folienverbund nicht möglich ist.

Selbstverständlich können außer den beschriebenen Schichten in dem Element noch weitere Schichten vorhanden sein, die beispielsweise der Fälschungssicherheit dienen. Ebenso ist es denkbar, den Papierträger entsprechend vorzubehandeln, um eine gute Haftung oder einen möglichst stufenlosen Übergang zu erzeugen. Derartige Maßnahmen sind z. B. das vorherige Aufbringen von Kleberschichten oder Haftvermittlern auf dem Papier oder auch das Vorprägen oder Glätten des Papiers in den Bereichen, in denen das Hologramm anzuordnen ist.

## Patentansprüche

1. Mehrschichtiges, optisch variables Transfermaterial mit einem Schichtaufbau in der nachfolgend ausgegebenen Reihenfolge :
- eine abziehbare Trägerschicht(10),
- mindestens eine Schutzschicht (14), wobei die Schutzschicht (14) als selbsttragende und dimensionsstabile Schicht ausgebildet ist, die eine Dicke von wenigen µm bis etwa 20 µm aufweist und aus einer Kunststoffolie aus Polycarbonat (PC), Polyvinylfluorid (PVF), Polyethylenterephthalat (PETP), Polychlortrifluorethylen (PCTFE) oder Tetrafluorethylen/Hexafluorpropylen-Copolymer (FEP) besteht,
- mindestens eine Schicht (16, 18, 20), die einen optisch variablen Effekt aufweist,
- eine Kleberschicht (22), die vorzugsweise von einer leicht entfernbaren Deckschicht (24) abgedeckt ist.

2. Optisch variables Transfermaterial nach Anspruch 1, **dadurch gekennzeichnet,** daß die Schicht mit dem optisch variablen Effekt aus einer Prägeschicht (16), einer reflektierenden Metallschicht (18) und einer weiteren Schutzschicht (20) besteht, die an die äußere Klebeschicht (22) angrenzt.

3. Optisch variables Transfermaterial nach Anspruch 1, **dadurch gekennzeichnet,** daß die Schicht mit dem optisch variablen Effekt aus einer lichtempfindlichen Emulsion oder einem lichtempfindlichen Polymer mit einem Volumenhologramm und einer die lichtempfindliche Schicht abdeckenden, schwarzen Rückschicht besteht, die an die Klebeschicht (22) angrenzt.

4. Optisch variables Transfermaterial nach Anspruch 3, **dadurch gekennzeichnet,** daß die Klebeschicht (22) schwarz eingefärbt ist.

5. Optisch variables Transfermaterial nach wenigstens einem der Ansprüche 1 bis 4, **dadurch gekenzeichnet,** daß die Klebeschicht (22) eine Schicht aus Heißschmelzklebstoff ist.

6. Optisch variables Transfermaterial nach wenigstens einem der Ansprüche 1 bis 5, **dadurch gekennzeichnet,** daß die Klebeschicht (22) eine Schicht aus Haftklebstoff ist.

7. Optisch variables Transfermaterial nach wenigstens einem der Ansprüche 1 bis 6, **dadurch gekennzeichnet,** daß die Umrisse des auf ein Substrat zu übertragenden Elements in der Schutzschicht (14) aus- bzw. vorgestanzt sind.

8. Optisch variables Transfermaterial nach wenigstens einem der Ansprüche 1 bis 6, **dadurch gekennzeichnet,** daß es in Form eines endlosen, aufwickelbaren Fadens oder Streifens vorliegt.

9. Verfahren zur Herstellung eines optisch variablen Transfermaterials mit folgenden Schritten:
a) Aufbringen einer Trennschicht (12) auf eine strapazierfähige und in Maschinen bearbeitbare Trägerfolie (10),
b) Aufbringen einer transparenten, selbsttragenden, dimensionsstabilen Schutzfolie (14) mit einer Dicke von wenigen Mikrometern bis etwa 20 µm auf die Trennschicht (12), wobei die Schutzfolie (14) von einer Kunststoffolie aus Polycarbonat (PC), Polyvinylfluorid (PVF), Polyethylenterephthalat (PETP), Polychlortrifluorethylen (PCTFE) oder Tetrafluorethylen/Hexafluorpropylen-Copolymer (FEP) gebildet wird,
c) Beschichten des mit den Schritten a) und b) hergestellten Verbundmaterials mit einer prägbaren Lackschicht (16),
d) Einprägen eines Hologramms in die Lackschicht,
e) Bedampfen der geprägten Lackschicht mit einer dünnen reflektierenden Metallschicht (18),
f) Aufbringen einer die Metallschicht (18) abdeckenden Schutzschicht (20),
g) Aufbringen einer Klebeschicht (22) und gegebenenfalls
h) Aufbringen einer ablösbaren Schutzschicht (24).

10. Verfahren zur Herstellung eines optisch variablen Transfermaterials mit folgenden Schritten:
a) Aufbringen einer Trennschicht (12) auf eine strapazierfähige und in Maschinen bearbeitbare Trägerfolie (10),
b) Aufbringen einer transparenten, selbsttragenden, dimensionsstabilen Schutzfolie (14) mit einer Dicke von wenigen Mikrometern bis etwa 20 µm auf die Trennschicht (12), wobei die Schutzfolie (14) von einer Kunststoffolie aus Polycarbonat (PC), Polyvinylfluorid (PVF), Polyethylenterephthalat (PETP), Polychlortrifluorethylen (PCTFE) oder Tetrafluorethylen/Hexafluorpropylen-Copolymer (FEP) gebildet wird.
c) Beschichten des mit den Schritten a) und b) hergestellten Verbundmaterials mit einer fotografischen Emulsion oder einem Fotopolymer,
d) Einbringen eines Volumenhologramms in die Emulsion oder das Fotopolymer durch entsprechende Belichtungsschritte,
d) Abdecken der Emulsion oder des Polymers mit einer schwarzen Rückschicht,
f) Aufbringen einer Klebeschicht (22) und gegebenenfalls
g) Aufbringen einer ablösbaren Schutzschicht (24).

11. Verfahren nach Anspruch 10, wobei die Klebeschicht schwarz eingefärbt ist.

12. Verfahren nach Anspruch 9 bis 11, wobei die Klebeschicht (22) vorzugsweise aus Haftklebstoff besteht, die von einer leicht entfernbaren Deckschicht (4), vorzugsweise Silikonpapier abgedeckt ist.

13. Verfahren nach einem der Ansprüche 9 bis 11, wobei die Umrisse des auf ein Substrat zu übertragenden Elements in der Schutzfolie (14) vorgestanzt werden.

14. Verfahren nach einem der Ansprüche 9 bis 11, wobei die Klebeschicht (22) aus einem Heißschmelzklebstoff besteht.

15. Verfahren nach wenigstens einem der Ansprüche 9 bis 14, wobei das Transfermaterial in schmale, endlose Fäden zerschnitten und aufgewickelt wird.

16. Verfahren zum Aufbringen eines optisch variablen Elements auf ein Substrat unter Verwendung von Transfermaterial nach Anspruch 8, wobei der Faden oder der Streifen von einer Vorratsrolle (38) abgewickelt wird, gegebenenfalls die leicht entfernbare Deckschicht (24) abgezogen wird, und der Faden oder der Streifen in einem Walzenspalt mit einem Substrat, vorzugsweise einem endlos zugeführten Wertpapier derart zusammengeführt wird, daß der Faden oder der Streifen mit seiner Klebeschicht am Wertpapier haftet, und wobei gleichzeitig beim Verlassen des Walzenspalts die Trägerfolie (10) von dem Faden oder dem Streifen abgezogen wird.

17. Verfahren zum Aufbringen eines optisch variablen Elements auf ein Substrat unter Verwendung von Transfermaterial nach Anspruch 7, wobei das Substrat und ein flächiges Stück des optisch variablen Transfermaterials mit dem vorgestanzten Bereich zusammengelegt werden, wobei der vorgestanzte Umriß mit einem vorzugsweise beheizten Stempel beaufschlagt wird, und wobei das flächige Stück vom Substrat derart abgezogen wird, daß der vorgestanzte Bereich des optisch variablen Elements am Substrat haften bleibt.

18. Verfahren nach Anspruch 17, **dadurch gekennzeichnet,** daß das am Substrat haftende optisch variable Element nach dem Abziehen der nicht vorgestanzten Bereiche nochmals ganzflächig und gegebenenfalls unter Wärmeeinwirkung an das Substrat angedrückt wird.

## Claims

1. A multilayer optically variable transfer material having a layer structure in the order stated below:
a removable carrier layer (10),
at least one protective layer (14), said protective layer (14) being designed as a self-supporting and dimensionally stable layer having a thickness of from a few micrometers to about 20 microns and consisting of a plastic film of polycarbonate (PC), polyvinyl fluoride (PVF), polyethylene terephthalate (PETP), polychlorotrifluoroethylene (PCTFE) or tetrafluoroethylene/hexafluoropropylene copolymer (FEP),
at least one layer (16, 18, 20) having an optically variable effect,
an adhesive layer (22) preferably covered by an easily removable cover layer (24).

2. The optically variable transfer material of claim 1, characterized in that the layer with the optically variable effect consists of an embossed layer (16), a reflective metal layer (18) and a further protective layer (20) that is adjacent to the outer adhesive layer (22).

3. The optically variable transfer material of claim 1, characterized in that the layer with the optically variable effect consists of a photosensitive emulsion or a photosensitive polymer with a volume hologram and a black backing layer covering the photosensitive layer and adjacent to the adhesive layer (22).

4. The optically variable transfer material of claim 3, characterized in that the adhesive layer (22) is colored black.

5. The optically variable transfer material of at least one of claims 1 to 4, characterized in that the adhesive layer (22) is a layer of hot-melt adhesive.

6. The optically variable transfer material of at least one of claims 1 to 5, characterized in that the adhesive layer (22) is a layer of contact adhesive.

7. The optically variable transfer material of at least one of claims 1 to 6, characterized in that the contours of the element to be transferred to a substrate are punched out or prepunched in the protective layer (14).

8. The optically variable transfer material of at least one of claims 1 to 6, characterized in that it is present in the form of an endless, reelable thread or strip.

9. A method for producing an optically variable transfer material having the following steps:
a) applying a separation layer (12) to a long-wearing and machinable carrier film (10),
b) applying a transparent, self-supporting, dimensionally stable protective film (14) with a thickness of from a few micrometers to about 20 microns to the separation layer (12), the protective film (14) consisting of a plastic film of polycarbonate (PC), polyvinyl fluoride (PVF), polyethylene terephthalate (PETP), polychlorotrifluoroethylene (PCTFE) or tetrafluoroethylene/ hexafluoropropylene copolymer (FEP),
c) coating the compound material produced by steps a) and b) with an embossable layer of lacquer (16),
d) embossing a hologram into the layer of lacquer,
e) metalizing the embossed layer of lacquer with a thin reflective metal layer (18),
f) applying a protective layer (20) covering the metal layer (18),
g) applying an adhesive layer (22), and optionally
h) applying a detachable protective layer (24).

10. A method for producing an optically variable transfer material having the following steps:
a) applying a separation layer (12) to a longwearing and machinable carrier film (10),
b) applying a transparent, self-supporting, dimensionally stable protective film (14) with a thickness of from a few micrometers to about 20 microns to the separation layer (12), the protective film (14) consisting of a plastic film of polycarbonate (PC), polyvinyl fluoride (PVF), polyethylene terephthalate (PETP), polychlorotrifluoroethylene (PCTFE) or tetrafluoroethylene/ hexafluoropropylene copolymer (FEP),
c) coating the compound material produced by steps a) and b) with a photographic emulsion or a photopolymer,
d) incorporating a volume hologram into the emulsion or the photopolymer by appropriate exposure steps,
e) covering the emulsion or the polymer with a black backing layer,
f) applying an adhesive layer (22), and optionally
g) applying a detachable protective layer (24).

11. The method of claim 10, wherein the adhesive layer is colored black.

12. The method of claims 9 to 11, wherein the adhesive layer (22) preferably consists of contact adhesive that is covered by an easily removable cover layer (4), preferably silicone paper.

13. The method of any of claims 9 to 11, wherein the contours of the element to be transferred to a substrate are prepunched in the protective film (14).

14. The method of any of claims 9 to 11, wherein the adhesive layer (22) comprises a hot-melt adhesive.

15. The method of at least one of claims 9 to 14, wherein the transfer material is cut into narrow endless threads and wound up.

16. A method for applying an optically variable element to a substrate using the transfer material of claim 8, wherein the thread or strip is wound off a supply reel (38), the easily removable cover layer (24) is optionally removed and the thread or strip is brought together in a roll slit with a substrate, preferably a continuously supplied paper of value, in such a way that the thread or strip sticks with its adhesive layer to the paper of value, and the carrier film (10) is simultaneously removed from the thread or strip upon leaving the roll slit.

17. A method for applying an optically variable element to a substrate using the transfer material of claim 7, wherein the substrate and a flat piece of the optically variable transfer material with the prepunched area are placed together, the prepunched contour is subjected to a preferably heated die, and the flat piece is removed from the substrate in such a way that the prepunched area of the optically variable element sticks to the substrate.

18. The method of claim 17, characterized in that the optically variable element adhering to the substrate is again pressed onto the substrate over the entire surface and optionally under the action of heat after removal of the non-prepunched areas.

## Revendications

1. Matériau de transfert multicouche optiquement variable, comprenant une structure de couches dans l'ordre indiqué ci-dessous :
- une couche support pelable (10),
- au moins une couche protectrice (14), la couche protectrice (14) étant conformée en couche autoporteuse et à dimensions stables qui présente une épaisseur de quelques micromètres jusqu'à environ 20 µm et qui est une feuille de matière synthétique, de préférence en polycarbonate (PC), fluorure de polyvinyle (PVF), polyéthylène-téréphtalate (PETP), polychlorotrifluoréthylène (PCTFE) ou copolymère tétrafluoréthylène/hexafluoropropylène (FEP),
- au moins une couche (16, 18, 20) qui présente un effet optiquement variable,
- une couche adhésive (22), qui est recouverte de préférence d'une couche de couverture (24) facile à retirer.

2. Matériau de transfert optiquement variable selon la revendication 1, caractérisé en ce que la couche à effet optiquement variable est constituée d'une couche à estamper (16), d'une couche métallique réfléchissante (18) et d'une autre couche protectrice (20) qui est contiguë à la couche adhésive extérieure (22).

3. Matériau de transfert optiquement variable selon la revendication 1, caractérisé en ce que la couche à effet optiquement variable est constituée d'une émulsion photosensible ou d'un polymère photosensible avec un hologramme volumique, et d'une couche arrière noire recouvrant la couche photosensible et qui est contiguë à la couche adhésive (22).

4. Matériau de transfert optiquement variable selon la revendication 3, caractérisé en ce que la couche adhésive (22) est colorée en noir.

5. Matériau de transfert optiquement variable selon l'une au moins des revendications 1 à 4, caractérisé en ce que la couche adhésive (22) est une couche en matière adhésive fondue.

6. Matériau de transfert optiquement variable selon l'une au moins des revendications 1 à 5, caractérisé en ce que la couche adhésive (22) est une couche en matière auto-adhésive.

7. Matériau de transfert optiquement variable selon l'une au moins des revendications 1 à 6, caractérisé en ce que les contours de l'élément à transférer sur un substrat sont découpés ou prédécoupés dans la couche protectrice (14).

8. Matériau de transfert optiquement variable selon l'une au moins des revendications 1 à 6, caractérisé en ce qu'il se présente sous la forme d'un fil ou d'une bande sans fin enroulable.

9. Procédé de fabrication d'un matériau de transfert optiquement variable, comprenant les étapes suivantes consistant à :
a) apposer une couche de séparation (12) sur une feuille support (10) résistante et traitable en machine,
b) apposer une feuille protectrice (14) transparente autoporteuse et à dimensions stables, d'une épaisseur de quelques micromètres à environ 20 *µ*m sur la couche de séparation (12), la feuille protectrice (14) étant formée par une feuille de matière synthétique, de préférence en polycarbonate (PC), fluorure de polyvinyle (PVF), polyéthylène-téréphtalate (PETP), polychlorotrifluoréthylène (PCTFE) ou copolymère tétrafluoréthylène/hexafluoropropylène (FEP),
c) revêtir le matériau composite fabriqué aux étapes a) et b) avec une couche de laque imprimable (16),
d) imprimer un hologramme dans la couche de laque,
e) déposer par évaporation une mince couche métallique réfléchissante (18) sur la couche de laque imprimée,
f) apposer une couche protectrice (20) recouvrant la couche métallique (18),
g) apposer une couche adhésive (22) et, le cas échéant,
h) apposer une couche protectrice pelable (24).

10. Procédé de fabrication d'un matériau de transfert optiquement variable, comprenant les étapes suivantes consistant à :
a) apposer une couche de séparation (12) sur une feuille support (10) résistante et traitable en machine,
b) apposer une feuille protectrice (14) transparente autoporteuse et à dimensions stables, d'une épaisseur de quelques micromètres à environ 20 µm sur la couche de séparation (12), la feuille protectrice (14) étant formée par une feuille de matière synthétique, de préférence en polycarbonate (PC), fluorure de polyvinyle (PVF), polyéthylène téréphtalate (PETP), polychlorotrifluoréthylène (PCTFE) ou copolymère tétrafluoréthylène/hexafluoro-propylène (FEP),
e) revêtir le matériau composite fabriqué aux étapes a) et b) avec une émulsion photographique ou un polymère photosensible,
d) imprimer un hologramme volumique dans l'émulsion ou le polymère photosensible par des étapes correspondantes d'exposition à la lumière,
e) recouvrir l'émulsion ou le polymère photosensible avec une couche arrière noire,
f) apposer une couche adhésive (22) et, le cas échéant,
g) apposer une couche protectrice pelable (24).

11. Procédé selon la revendication 10, la couche adhésive étant colorée en noir.

12. Procédé selon l'une des revendications 9 à 11, la couche adhésive (22) étant constituée de préférence d'une matière auto-adhésive, qui est recouverte d'une couche de couverture (4) facile à retirer, de préférence du papier à la silicone.

13. Procédé selon l'une des revendications 9 à 11, les contours de l'élément à transférer sur un substrat étant prédécoupés dans la feuille protectrice (14).

14. Procédé selon l'une des revendications 9 à 11, la couche adhésive (22) étant constituée d'une matière adhésive fondue.

15. Procédé selon l'une au moins des revendications 9 à 14, le matériau de transfert étant découpé en fils étroits sans fin et enroulé.

16. Procédé d'application d'un élément optiquement variable sur un substrat en utilisant un matériau de transfert selon la revendication 8, le fil ou la bande étant déroulé depuis un rouleau de stockage (38), le cas échéant la couche de couverture (24) facile à enlever étant retirée, et le fil ou la bande étant introduit dans une emprise de cylindres avec un substrat, de préférence une valeur introduite sans fin, de telle manière que le fil ou la bande adhère avec sa couche adhésive à la valeur, la feuille support (10) étant simultanément retirée du fil ou de la bande lorsqu'il/elle quitte l'emprise de cylindres.

17. Procédé d'application d'un élément optiquement variable sur un substrat en utilisant un matériau de transfert selon la revendication 7, le substrat et un fragment plan du matériau de transfert optiquement variable avec la zone prédécoupée étant empilés, le contour prédécoupé étant frappé avec un poinçon de préférence chauffé, et le fragment plan étant retiré du substrat, de sorte que la zone prédécoupée de l'élément optiquement variable reste collée au substrat.

18. Procédé selon la revendication 17, caractérisé en ce que l'élément optiquement variable adhérant au substrat, après le retrait des zones non prédécoupées, est de nouveau appuyé sur le substrat sur toute la surface, et le cas échéant avec application de chaleur.
